# EUROPÄISCHE PATENTSCHRIFT

(11) **EP 3 194 092 B1**
(45) Veröffentlichungstag und Bekanntmachung des Hinweises auf die Patenterteilung: **13.04.2022**
(21) Anmeldenummer: 15766117.4
(22) Anmeldetag: 15.09.2015
(51) Int. Cl.: B21J 15/02, B21J 15/14, B21J 15/32, B23P 19/06, F16B 31/02

(54) **VERFAHREN ZUM SCHRAUBEN EINES SCHLIESSRINGS AUF EINEN GEWINDEBOLZEN UND SCHRAUBVORRICHTUNG**
METHOD OF SCREWING A COLLAR ONTO A THREADED BOLT AND SCREWING DEVICE
MÉTHODE DE VISSER UNE COLLIER SUR UN BOULON FILETÉ ET DISPOSITIF DE VISSAGE

(30) Priorität: 15.09.2014 DE 102014113263
(43) Veröffentlichungstag der Anmeldung: 26.07.2017
(73) Patentinhaber: Broetje-Automation GmbH, 26180 Rastede (DE)
(72) Erfinder: HINRICHS, Bruno, 26125 Oldenburg (DE); HARMS, Jannik, 26180 Rastede (DE)
(74) Vertreter: Gottschald, Jan
(86) Internationale Anmeldenummer: PCT/EP2015/071059
(87) Internationale Veröffentlichungsnummer: WO 2016/041942

(56) Entgegenhaltungen:
- US-A- 4 538 483
- US-A- 5 305 666
- US-A1- 2013 212 883

## Beschreibung

Die Erfindung betrifft ein Verfahren zum Schrauben eines Schließrings auf einen Gewindebolzen mit den Merkmalen von Anspruch 1 sowie eine Schraubvorrichtung zum Schrauben eines Schließrings auf einen Gewindebolzen gemäß Anspruch 16.

In der US 2013/0212883 A1 ist ein manuelles sowie ein mittels eines Roboters automatisiertes Schrauben eines Schließrings auf einen Gewindebolzen beschrieben. Zum Aufschrauben des Schließrings weist der Roboter einen Drehantrieb auf.

Für die Verbindung von Strukturbauteilen, z. B. auf dem Gebiet der Luftfahrttechnik, werden regelmäßig Nietverbindungen verschiedener Art verwendet. Eine Variante sieht dabei die Verwendung von Nietbolzen mit einem Gewindeabschnitt - hier und nachfolgend als Gewindebolzen bezeichnet - vor. Nach dem Durchführen des Gewindebolzens durch die Öffnungen der Strukturbauteile wird ein Schließring - auch als Collar bezeichnet - auf den Gewindebolzen zum Herstellen der Nietverbindung aufgeschraubt. Hierzu wird der Gewindebolzen gegen Verdrehung fixiert und zwar regelmäßig dadurch, dass ein Pin einer Koppelvorrichtung in eine entsprechend konturierte Aufnahme des Gewindebolzens eingefädelt wird. Durch diese Fixierung des Gewindebolzens kann der Schließring aufgeschraubt und mit dem erforderlichen Drehmoment angezogen werden.

Diese Art von Verbindungen werden bisher zum großen Teil durch ein manuell geführtes Werkzeug vorgenommen. Zeitaufwändig ist dabei einerseits das Einfädeln des Pins in den Nietbolzen zu seiner Fixierung einerseits und ggf. auch das Einfädeln einer Schließringaufnahme auf den Schließring, um den Schließring aufzuschrauben zu können.

Daher besteht das der Erfindung zugrunde liegende Problem darin, das Herstellen solcher Verbindungen auf einfache und kostengünstige Art und Weise automatisieren zu können.

Das obige Problem wird gemäß einer ersten Lehre der Erfindung bei einem Verfahren zum Schrauben eines Schließrings auf einen Gewindebolzen mit den Merkmalen von Anspruch 1 gelöst. Ebenso wird das Problem durch eine Schraubvorrichtung mit den Merkmalen von Anspruch 16 gelöst.

Wesentlich für die Lehre der Erfindung ist die Erkenntnis, dass derselbe Antrieb sowohl zum drehenden Antreiben der Schließringaufnahme als auch zum drehenden Antreiben der Koppelvorrichtung verwendet werden kann. Dadurch lassen sich die Schritte des Einfädelns der Koppelvorrichtung in den Gewindebolzen und des Aufschraubens der Schließringaufnahme automatisieren, da diese Schritte jeweils auf einer Drehbewegung, regelmäßig auch um dieselbe Drehachse, beruhen.

Es kann also der Antrieb eine erste Drehbewegung ausführen, die auf die Koppelvorrichtung zum Einfädeln in den Gewindebolzen übertragen wird und dann eine zweite Drehbewegung ausführen, die mittels der Schließringaufnahme auf den Schließring übertragen wird, sodass der Schließring auf den Gewindebolzen aufgeschraubt wird. Ein manueller Eingriff ist für diese Schritte nicht erforderlich, wodurch der gesamte Vorgang automatisiert ablaufen kann.

Die bevorzugte Ausgestaltung des Unteranspruchs 2 sieht ferner vor, dass auch zum Einfädeln der Schließringaufnahme auf den Schließring der Drehantrieb zum Antreiben der Schließringaufnahme verwendet wird.

Neben einer solchen Drehbewegung kann auch eine lineare Bewegung insbesondere entlang der Dreh- bzw. Schraubachse der Koppelvorrichtung vorgesehen. Auf diese Weise kann die Koppelvorrichtung den Schließring vor einem Herunterfallen sichern, während die Schließringaufnahme auf den Schließring eingefädelt wird. Eine weitere bevorzugte Möglichkeit zum Sichern des Schließrings stellt der Unteranspruch 3 vor.

In einem zweiten Schritt kann die Koppelvorrichtung bis zu der Berührung mit dem Gewindebolzen linear weiterbewegt werden. Ebenso kann eine entsprechende Linearbewegung für die Schließringaufnahme vorgesehen sein.

Prinzipiell gibt es verschiedene Möglichkeiten, wechselweise mit dem selben Drehantrieb die Koppelvorrichtung und die Schließringaufnahme anzutreiben. Die bevorzugte Ausgestaltung des Unteranspruchs 4 schlägt dazu speziell das Vorsehen einer Kuppelanordnung und insbesondere einer Freilaufanordnung vor, sodass abhängig von der Drehrichtung des Motors jeweils die Koppelvorrichtung oder die Schließringaufnahme angetrieben wird.

Insbesondere kann vorgesehen sein, dass der Drehantrieb einen Motor und eine Kuppelanordnung, insbesondere eine Freilaufanordnung, zum antreibenden Kuppeln des Motors mit der Schließringaufnahme und der Koppelvorrichtung aufweist, insbesondere, sodass bei einer Bewegung des Motors in einer ersten Richtung nur die Schließringaufnahme drehend angetrieben wird und bei einer Bewegung des Motors in einer der ersten Richtung entgegengesetzten Richtung, vorzugsweise nur, die Koppelvorrichtung drehend angetrieben wird, weiter insbesondere, dass die jeweilige Drehrichtung der Schließringaufnahme und der Koppelvorrichtung entgegengesetzt ist.

Gemäß Unteranspruch 6 schützt eine Rohranordnung, innerhalb derer die obigen Linearbewegungen stattfinden können, den Aufschraubvorgang vor äußeren Einflüssen und erleichtert die richtige Platzierung der Koppelvorrichtung und der Schließringaufnahme im Verhältnis zum Gewindebolzen.

Der Unteranspruch 9 beschreibt das Vorsehen eines Zuführgreifers, welcher den Schließring zum Aufschrauben auf den Gewindebolzen aus einer Bevorratung zuführt und für das Einfädeln geeignet positioniert.

Insbesondere kann vorgesehen sein, dass ein Zuführgreifer den Schließring, vorzugsweise kraftschlüssig, insbesondere aus einer Bevorratung, greift und den Schließring auf der Schraubachse bezogen auf die Schließringaufnahme zum Einfädeln der Schließringaufnahme positioniert, weiter insbesondere, dass der Zuführgreifer eine Bewegung im Wesentlichen senkrecht zur Schraubachse zum Positionieren des Schließrings ausführt.

Eine Ausgestaltung der obigen Schließringe sieht vor, dass sie einen Abriss aufweisen, sodass bei Erreichen eines Abrissdrehmoments beim Aufschrauben des Schließrings der Abriss von dem Schließring im Übrigen getrennt wird. Auf diese Weise soll gewährleistet werden, dass das Herstellen der Verbindung bzw. das Anziehen des Schließrings mit dem gewünschten Drehmoment erfolgte. Die bevorzugten Ausgestaltungen der Unteransprüche 10 bis 13 betreffen die Verwendung solcher Schließringe.

Ferner kann ein Abführgreifer vorgesehen werden, welcher aktiv ein solches Abrissteil nach dem Schrauben des Schließrings auf den Gewindebolzen aus der Schließringaufnahme entfernt. Damit ist eine Entsorgung sichergestellt und es kann insbesondere so gewährleistet werden, dass die Taktung des Schraubvorgangs insgesamt erhöht wird.

In der lediglich ein Ausführungsbeispiel wiedergebenden Zeichnung zeigt
- Fig. 1: eine Perspektivansicht einer Schraubvorrichtung zum Ausführen des vorschlagsgemäßen Verfahrens,
- Fig. 2: eine Detailansicht der Schließringaufnahme und der Koppelvorrichtung der Schraubvorrichtung aus der Fig. 1 sowie eines Schleißrings und eines Gewindebolzens,
- Fig. 3a-b: die Schraubvorrichtung der Fig. 1 a) vor und b) nach einer Linearbewegung,
- Fig. 4a-c: die Schraubvorrichtung der Fig. 1 in einem Längsschnitt zu drei verschiedenen Zeitpunkten vor dem Aufschrauben des Schließrings bei der Ausführung des vorschlagsgemäßen Verfahrens und
- Fig. 5a-c: die Ansicht der Fig. 4 zu drei verschiedenen Zeitpunkten während und nach dem Aufschrauben des Schließrings bei der Ausführung des vorschlagsgemäßen Verfahrens.

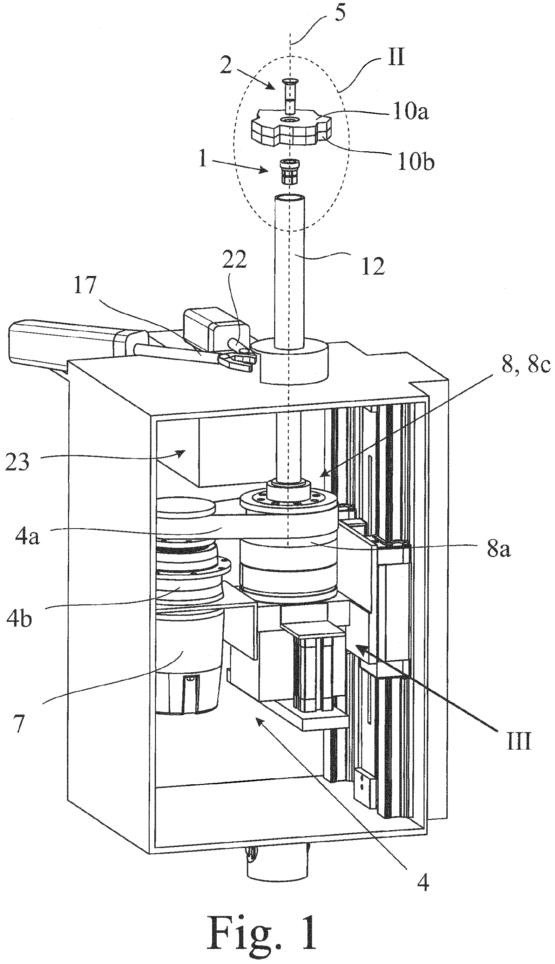

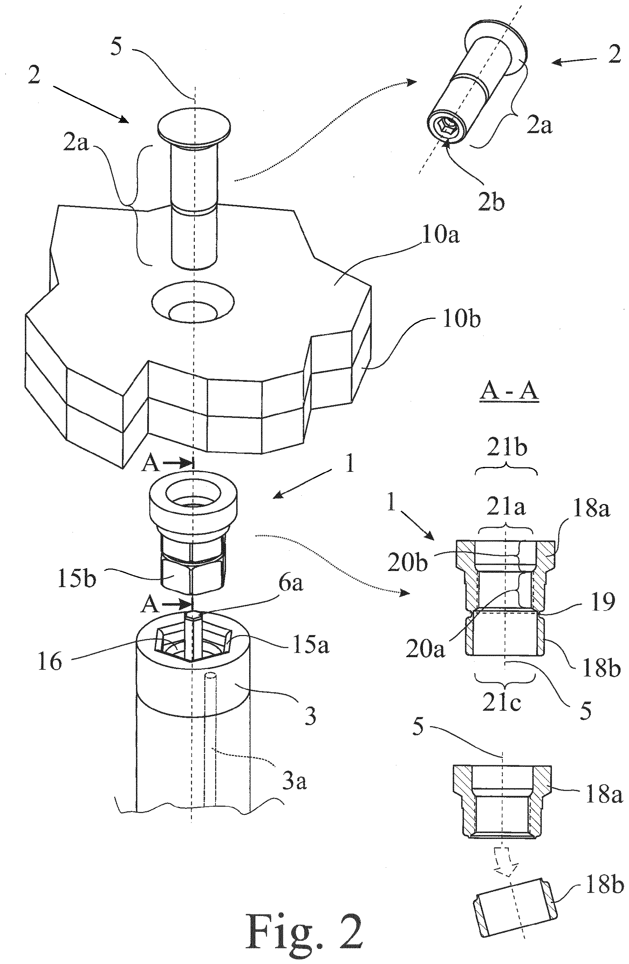

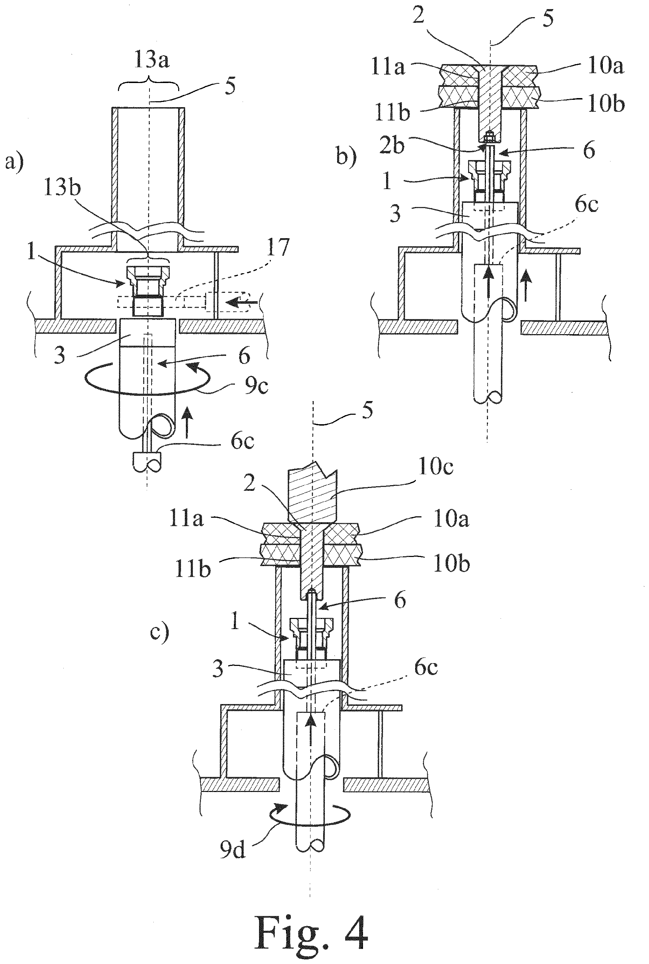

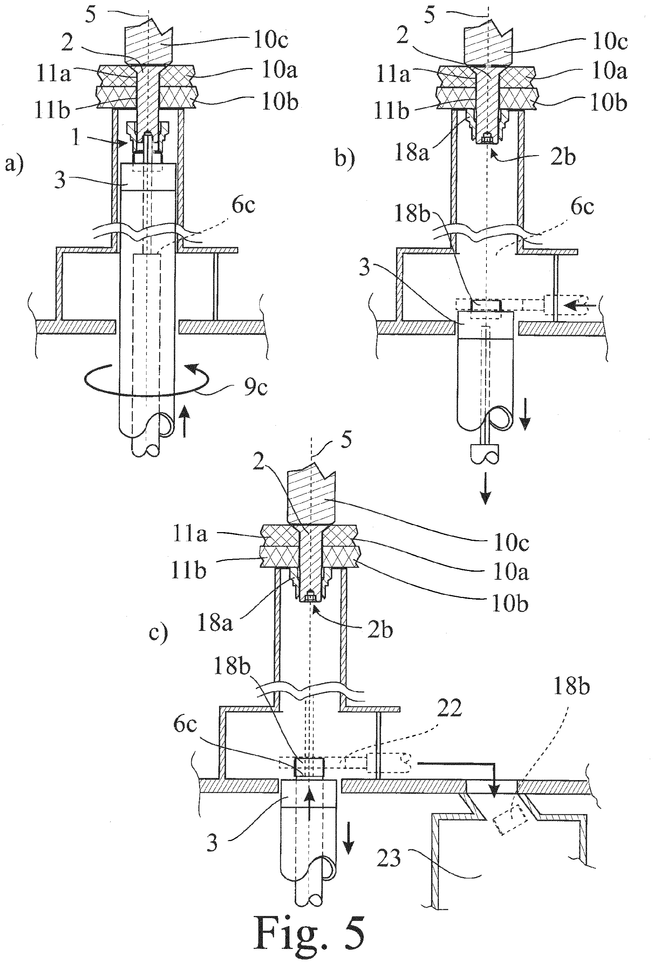

Das vorschlagsgemäße Verfahren gemäß der Lehre betrifft das Schrauben eines Schließrings 1 auf einen Gewindebolzen 2. Dabei wird eine Koppelvorrichtung 6 zum Einfädeln in den Gewindebolzen 2 von einem Drehantrieb 4 drehend angetrieben, und zwar vorzugsweise um eine Schraubachse 5. Unter dem Begriff "Einfädeln" wird hier und nachfolgend allgemein das Ausrichten, insbesondere durch Drehen, und ggf. das translatorische Bewegen eines ersten Verbindungsteils zum Herstellen einer Verbindung und insbesondere eines Formschlusses mit einem entsprechenden zweiten Verbindungsteil verstanden. Ein Beispiel hierfür ist das Ausrichten eines Vierkantschlüssels zum Fassen einer entsprechenden Schraube mit einem quadratischen Kopf. Zurückkehrend zum Ausführungsbeispiel ist die prinzipielle Konstellation der obigen Teile in der Fig. 1 und detaillierter in der Fig. 2 zu erkennen. Gemäß dem vorschlagsgemäßen Verfahren wird anschließend der Schließring 1 durch eine von dem Drehantrieb 4 drehend angetriebene Schließringaufnahme 3 auf den von der Koppelvorrichtung 6 fixierten Gewindebolzen 2 geschraubt. Dieses Aufschrauben ist in der Fig. 5a dargestellt, wobei das Einfädeln der Koppelvorrichtung 6 in den Gewindebolzen 2 zwischen den Darstellungen der Fig. 4b und der Fig. 4c erfolgt. Es kommt also dem Drehantrieb 4 eine Doppelfunktion zum Antreiben der Schließringaufnahme 3 einerseits und der Koppelvorrichtung 6 andererseits zu.

Vorzugsweise wird ebenso die Schließringaufnahme 3 zum Einfädeln auf den Schließring 1 von dem Drehantrieb 4 drehend angetrieben. Vorzugsweise erfolgt auch diese Drehung um die Schraubachse 5. Grundsätzlich kann das Einfädeln der Schließringaufnahme 3 und das Einfädeln der Koppelvorrichtung 6 in beliebiger Reihenfolge erfolgen. In der Zeichnung erfolgt das Einfädeln der Schließringaufnahme 3 auf den Schließring 1 zwischen den Darstellungen der Fig. 4a und der Fig. 4b.

Prinzipiell ist die Koppelvorrichtung 6 an dem Vorgang des Einfädelns der Schließringaufnahme 3 auf den Schließring 1 nicht beteiligt. Sie kann aber dazu verwendet werden, z. B. ein Herunterfallen des Schließrings 1 während dieses Einfädelns zu verhindern. Hier ist es bevorzugt, dass zur Sicherung des Schließrings 1 während des Einfädelns der Schließringaufnahme 3 auf den Schließring 1 die Koppelvorrichtung 6 linear bewegt wird, bis sie durch den Schließring 1 durchgeführt ist. Diese lineare Bewegung der Koppelvorrichtung 6, welche bevorzugt entlang der Schraubachse 5 erfolgt, ist in der Fig. 4a angedeutet.

Eine solche lineare Bewegung kann gleichsam eine Vorbewegung der Koppelvorrichtung 6 vor dem Einfädeln in den Gewindebolzen 2 bilden. Somit ist vorzugsweise vorgesehen, dass nach dem Einfädeln der Schließringaufnahme 3 auf den Schließring 1 die Koppelvorrichtung 6 linear bis zu einer Berührung der Koppelvorrichtung 6 mit dem Gewindebolzen 2 bewegt wird. Auch diese lineare Bewegung erfolgt vorzugsweise entlang der Schraubachse 5, wie beispielhaft in den Fig. 4b und 4c dargestellt ist. Wie ebenfalls dargestellt ist, kann bei dieser Bewegung der Koppelvorrichtung 6 die Schließringaufnahme 3 zumindest teilweise mitbewegt werden.

Vorzugsweise umfasst das Einfädeln auf den Schließring 1 das Herstellen eines formschlüssigen Eingriffs zwischen der Schließringaufnahme 3 und dem Schließring 1. Mit anderen Worten entsteht ein formschlüssiger Eingriff zwischen der Schließringaufnahme 3 und dem Schließring 1 als Ergebnis des Einfädelns. Alternativ oder zusätzlich hierzu ist es bevorzugt, dass das Einfädeln in den Gewindebolzen 2 das Herstellen eines formschlüssigen Eingriffs zwischen der Koppelvorrichtung 6 und dem Gewindebolzen 2 umfasst.

Eine weitere Möglichkeit, den Schließring 1 nach dem Einfädeln der Schließringaufnahme 3 auf den Schließring 1 zu sichern besteht darin, den Schließring 1 anzusaugen. Daher ist bevorzugt vorgesehen, dass die Schließringaufnahme 3 eine, insbesondere entlang der Schraubachse 5 verlaufende, Bohrung 3a zum Ansaugen des Schließrings 1 durch einen Unterdruck und insbesondere durch ein Vakuum aufweist.

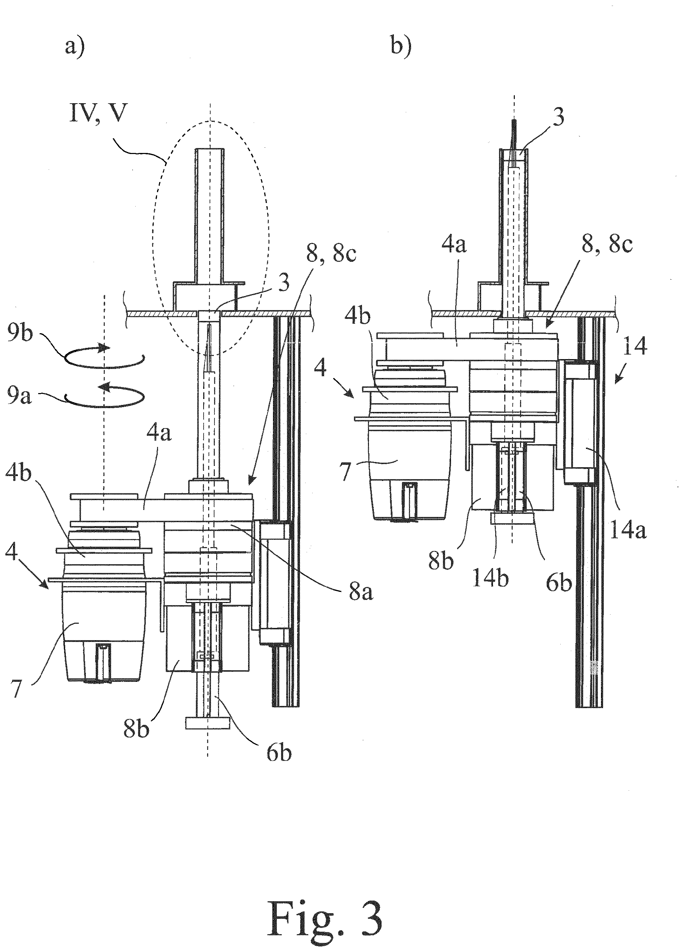

Der obige wahlweise Antrieb der Schließringaufnahme 3 oder der Koppelvorrichtung 6 kann dabei auf unterschiedliche Art und Weise umgesetzt werden. Eine besonders bevorzugte Variante sieht dabei vor, dass der Drehantrieb 4 einen Motor 7 und eine Kuppelanordnung 8, bei der es sich insbesondere um eine Freilaufanordnung 8c handeln kann, zum antreibenden Kuppeln des Motors 7 mit der Schließringaufnahme 3 und der Koppelvorrichtung 6 aufweist. Vorzugsweise handelt es sich bei dem Motor 7 um einen Servomotor, welcher insbesondere drehmoment- und/oder drehzahlgesteuert ist. Diese Kuppelanordnung 8 kann insbesondere so ausgestaltet sein, dass durch eine Bewegung des Motors 7 in einer ersten Richtung 9a nur die Schließringaufnahme 3 drehend angetrieben wird und durch eine Bewegung des Motors 7 in einer der ersten Richtung 9a entgegengesetzten Richtung 9b die Koppelvorrichtung 6 drehend angetrieben wird. Bei diesem Antrieb der Koppelvorrichtung 6 kann gemäß einer ersten Variante nur die Koppelvorrichtung 6 angetrieben oder ein gleichzeitiger Antrieb der Koppelvorrichtung 6 und der Schließringaufnahme 3 erfolgen. Die erste Richtung 9a und die entsprechende entgegengesetzte Richtung 9b sind jeweils in der Fig. 3a beispielhaft gezeigt. In den Fig. 4a, 4c und 5a ist ebenso die entsprechende Aufnahmedrehrichtung 9c und die Koppeldrehrichtung 9d dargestellt.

Die spezielle mechanische Ausgestaltung dieser Kuppelanordnung 8 kann dabei im Prinzip beliebig erfolgen. In dem dargestellten Ausführungsbeispiel ist ein Riemen 4a des Drehantriebs 4 vorgesehen, welcher den Motor 7 mit der Kuppelanordnung 8, bei welcher es sich hier um eine Freilaufanordnung 8c handelt, koppelt. Ebenso ist ein Drehmomentflansch 4b des Drehantriebs 4 zum Messen des Anziehdrehmoments vorhanden, wodurch ein drehmomentgesteuertes Anziehen des Schließrings 1 ermöglicht wird. Die Kuppelanordnung 8 weist einen - hier nicht näher dargestellten - Freilauf 8a auf. Ferner weist die Kuppelanordnung 8 eine Klemmeinheit 8b auf, welche schaltbar zum klemmenden Eingriff in Eingriff mit einer Keilwelle 6b gebracht werden kann, welche Keilwelle 6b wiederum drehfest mit der Koppelvorrichtung 6 verbunden ist.

Durch den Freilauf 8a kann, wie oben beschrieben, je nach Bewegungsrichtung des Motors 7, wechselweise die Schließringaufnahme 3 und die Koppelvorrichtung 6 drehend angetrieben werden. Mittels der Klemmeinheit 8b kann die Koppelvorrichtung 6 auch insbesondere gegenüber einer Drehbewegung geklemmt werden, was insbesondere beim Schrauben des Schließrings 1 auf den Gewindebolzen 2 von Vorteil ist. Bevorzugt ist entsprechend vorgesehen, dass während der Schließring 1 auf den Gewindebolzen 2 geschraubt wird, die Koppelvorrichtung 6 insbesondere durch die Klemmeinheit 8b geklemmt wird.

Bevorzugt ist weiter vorgesehen, dass die jeweilige Drehrichtung der Schließringaufnahme 3 und der Koppelvorrichtung 6 entgegengesetzt ist. Die auf den Antrieb durch den Drehantrieb 4 und speziell den Motor 7 zurückgehende Drehrichtung der Schließringaufnahme 3 - die Aufnahmedrehrichtung 9c - ist in den Fig. 4a - zum Einfädeln auf den Schließring 1 - und 5a - zum Aufschrauben des Schließrings 1 - dargestellt. Die entsprechende Drehrichtung der Koppelvorrichtung 6 - die Koppeldrehrichtung 9d - beim Einfädeln in den Gewindebolzen 2 ist in der Fig. 4c dargestellt.

Vorzugsweise wird erst nach dem erfolgten Einfädeln der Koppelvorrichtung 6 in den Gewindebolzen 2 die Schließringaufnahme 3 mit dem Schließring 1 vollständig zum Gewindebolzen 2 bewegt, wie sich aus den Fig. 4c und 5a ergibt. Daher ist bevorzugt, dass nach dem Einfädeln der Koppelvorrichtung 6 in den Gewindebolzen 2 die Schließringaufnahme 3 linear mit dem Schließring 1 bis zu einer Berührung des Schließrings 1 mit dem Gewindebolzen 2 bewegt wird. Im Anschluss hieran wird der Schließring 1 aufgeschraubt. Hier ist einerseits bevorzugt, dass diese lineare Bewegung entlang der Schraubachse 5 erfolgt. Andererseits ist es ebenso bevorzugt, dass bei der linearen Bewegung der Schließringaufnahme 3 die Koppelvorrichtung 6 im Wesentlichen entlang der Schraubachse 5 feststeht. Das ergibt sich dadurch, dass die Koppelvorrichtung 6 in den Gewindebolzen 2 eingefädelt bleibt - wie in den Fig. 4c und 5a dargestellt - und dadurch, dass die Klemmeinheit 8b die Keilwelle 6b durch den obigen klemmenden Eingriff festhält.

Wie bereits beschrieben wird das Verfahren gemäß dem Vorschlag regelmäßig zur Verbindung von Verbindungsstücken 10a, b durch den Gewindebolzen 2 verwendet, wobei es sich bei den Verbindungsstücken 10a, b um Strukturbauteile z. B. aus Aluminium für ein Flugzeug handeln kann. Dementsprechend ist vorzugsweise der Gewindebolzen 2 durch Verbindungsstücköffnungen 11a, b von Verbindungsstücken 10a, b geführt und es umläuft eine Rohranordnung 12 einen aus den Verbindungsstücköffnungen 11a, b herausragenden Bolzenabschnitt 2a. Die Beschaffenheit der Rohranordnung 12 ist aus den Fig. 2a, b erkennbar. Zur Fixierung des Gewindebolzens 2 entlang der Schraubachse 5 kann ferner ein Gegendruckstück, bei welchem es sich hier speziell um ein Nietwerkzeug 10c handelt, vorgesehen sein, welches gemäß der Darstellung der Fig. 4c an die Verbindungsstücke 10a, b an der der Rohranordnung 12 abgewandten Seite gedrückt wird.

Durch das Vorsehen der obigen Rohranordnung 12 werden einerseits die Schließringaufnahme 3 und die Koppelvorrichtung 6 geschützt und es ist andererseits möglich, die Schließringaufnahme 3 und die Koppelvorrichtung 6 bezogen auf den Gewindebolzen 2 dadurch genau zu platzieren, dass der durch die Verbindungsstücköffnungen 11a, b geführte Gewindebolzen 2 bzw. sein Bolzenabschnitt 2a von der Rohranordnung 12 umschlossen wird. Auf diese Weise ist die gewünschte relative Position zwischen dem Gewindebolzen 2 einerseits und der Koppelvorrichtung 6 sowie der Schließringaufnahme 3 festgelegt. Bevorzugt ist in diesem Zusammenhang ebenso, dass die Koppelvorrichtung 6 und/oder die Schließringaufnahme 3 jeweils linear durch die Rohranordnung 12 bewegt werden, was insbesondere die oben beschriebene jeweilige Bewegung betrifft. Eine besonders genaue relative Platzierung kann schließlich dadurch erreicht werden, dass die Rohranordnung 12 einen Innendurchmesser 13a aufweist, welcher im Wesentlichen einem Außendurchmesser 13b der Schließringaufnahme 3 entspricht.

Weiter ist es bevorzugt, dass die Koppelvorrichtung 6 durch einen Linearantrieb 14 linear bewegt wird. Im vorliegenden Ausführungsbeispiel und wie aus den Fig. 2a, b erkennbar umfasst der Linearantrieb 14 eine hier pneumatisch angetriebene Lineareinheit 14a, welche die Koppelvorrichtung 6, die Schließringaufnahme 3 sowie auch den Motor 7 und die Kuppelanordnung 8 gemeinsam linear und zwar entlang der Schraubachse 5 bewegen kann. Dies entspricht der bevorzugten Ausführung, gemäß der die Schließringaufnahme 3 durch den Linearantrieb 14 linear bewegt wird. Hier und vorzugsweise ist es so, dass die Koppelvorrichtung 6 und die Schließringaufnahme 3 jeweils unabhängig voneinander durch den Linearantrieb 14 bewegbar sind. Zu diesem Zweck weist der Linearantrieb 14a einen Sekundärantrieb 14b auf, bei dem es sich vorliegend um einen Pneumatikzylinder handelt. Dieser Sekundärantrieb 14b wird von der Lineareinheit 14a mitbewegt, kann aber seinerseits die Koppelvorrichtung 6 separat insbesondere gegenüber der Schließringaufnahme 3 entlang der Schraubachse 5 bewegen.

Nun detaillierter auf die Schließringaufnahme 3 eingehend, ist für sie vorzugsweise vorgesehen, dass die Schließringaufnahme 3 eine Innenkontur 15a zum Fixieren des Schließrings 1 aufweist. Diese Innenkontur kann gemäß der Darstellung der Fig. 2 ein Innenmehrkant sein, welcher insbesondere einer Außenkontur 15b und damit hier dem Außenmehrkant des Schließrings 1 entspricht. Die Schließringaufnahme 3 kann auch mehrteilig ausgeführt sein und insbesondere eine auswechselbare Aufnahmekrone aufweisen. Ebenso der Darstellung der Fig. 2 entsprechend kann diese Innenkontur 15 eine Durchführöffnung 16 bilden, durch welche die Koppelvorrichtung 6 insbesondere entlang der Schraubachse 5 bewegbar ist. Es bietet sich an, dass die Schraubachse 5 im Wesentlichen mittig zur Durchführöffnung 16 angeordnet ist.

Vor dem Einfädeln der Schließringaufnahme 3 auf den Schließring 1 wird der Schließring 1 geeignet platziert. Bevorzugt kann dies dadurch geschehen, dass ein Zuführgreifer 17 den Schließring 1 greift und den Schließring 1 auf der Schraubachse 5 bezogen auf die Schließringaufnahme 3 zum Einfädeln der Schließringaufnahme 3 positioniert. Dies automatisiert den Prozess weiter und führt dazu, dass zum Einfädeln lediglich die obige Linearbewegung und Drehbewegung der Schließringaufnahme 3 erforderlich ist. Dieses Greifen erfolgt bevorzugt zumindest auch kraftschlüssig. Vorteilhafterweise wird der Schließring 1 aus einer - hier nicht dargestellten - Bevorratung gegriffen. Aus der Fig. 4a ergibt sich die bevorzugte Variante, nach der der Zuführgreifer 17 eine Bewegung im Wesentlichen senkrecht zur Schraubachse 5 zum Positionieren des Schließrings 1 ausführt. Um das Einfädeln der Schließringaufnahme 3 auf den Schließring 1 zu erleichtern, kann nach dem Positionieren des Schließrings 1 dieser - während er von dem Zuführgreifer 17 gegriffen ist - gegen die Schließringaufnahme 3 relativ bewegt werden. Das kann sowohl durch eine Bewegung des Zuführgreifers 17 zur Schließringaufnahme 3 als auch umgekehrt oder eine Bewegung sowohl des Zuführgreifers 17 als auch der Schließringaufnahme 3 zueinander erfolgen.

Bezüglich der Koppelvorrichtung 6 ist bevorzugt vorgesehen, dass es sich um einen Mehrkant-Pin 6a handelt, welcher in eine Mehrkantaufnahme 2b des Gewindebolzens 2 eingefädelt wird. Auch die Koppelvorrichtung 6 und insbesondere der Mehrkant-Pin 6a kann, zur verbesserten Austauschbarkeit dieses Verschleißteiles, mehrteilig ausgeführt sein.

Grundsätzlich können mit dem vorschlagsgemäßen Verfahren viele verschiedene Arten von Schließringen 1 auf Gewindebolzen 2 geschraubt werden. Besonders bietet sich das Verfahren für Schließringe 1 mit einem Abriss an, welche Schließringe 1 auch als Collar bezeichnet werden. Speziell ist also bevorzugt, dass der Schließring 1 einen Befestigungsteil 18a und einen Abrissteil 18b aufweist und dass bei Erreichen eines, insbesondere vordefinierten, Abrissdrehmoments beim Aufschrauben des Schließrings 1 der Abrissteil 18b von dem Befestigungsteil 18a abgerissen wird. Auf diese Weise kann sichergestellt werden, dass ein gewünschtes Anzugsdrehmoment beim Anschrauben des Schließrings 1 aufgebracht wurde. Ebenso ist es bevorzugt, dass die Schließringaufnahme 3 beim Aufschrauben des Schließrings 1 diesen an dem Abrissteil 18b angreift. Wie insbesondere aus der Fig. 2 erkennbar, kann der Schließring 1 eine Sollbruchstelle 19 und insbesondere eine Materialschwächung zwischen dem Befestigungsteil 18a und dem Abrissteil 18b aufweisen.

Beim Schließring 1 ist einerseits bevorzugt vorgesehen, dass der Abrissteil 18b eine gewindefreie Innenwandung aufweist. Da der Abrissteil 18b abgerissen werden soll, ist ein Aufschrauben nicht erforderlich. Bezüglich des Befestigungsteils 18a ist andererseits bevorzugt vorgesehen, dass der Befestigungsteil 18a einen Gewindeabschnitt 20a mit einem Innengewinde und einen, vorzugsweise bolzenseitig zum Gewindeabschnitt 20a angeordneten, Abstandsabschnitt 20b mit einer gewindefreien Innenwandung aufweist. Bevorzugt handelt es sich bei dem Abstandsabschnitt 20b um einen Verformungsabschnitt zum Crimpen. Entsprechend ist bevorzugt vorgesehen, dass dieser Abstandsabschnitt 20b beim Aufschrauben und Anziehen des Schließrings 1 verformt wird. Wie in der Fig. 2 dargestellt, kann ein Abstands-Innendurchmesser 21b des Abstandsabschnitts 20b größer als ein Gewinde-Innendurchmesser 21a des Gewindeabschnitts 20a sein.

Bezüglich des Abrissteils 18b ist dann bevorzugt und wie ebenfalls in der Fig. 2 dargestellt vorgesehen, dass ein Abriss-Innendurchmesser 21c des Abrissteils 18b größer als der Gewinde-Innendurchmesser 21a und/oder größer als der Abstands-Innendurchmesser 21b ist.

Die Automatisierung des Vorgangs der Verbindungsherstellung kann auch nach dem Abriss des Abrissteils 18b fortgesetzt werden. So kann vorgesehen sein, dass nach dem Abreißen des Abrissteils 18b die Schließringaufnahme 3 das Abrissteil 18b weiterhin greift. Dies ist in der Fig. 5b dargestellt und erlaubt die automatisierte Abführung des Abrissteil 18b. Wie ebenfalls in der Fig. 5b dargestellt kann nach dem Abreißen des Abrissteils 18b die Schließringaufnahme 3 mit dem Abrissteil 18b insbesondere entlang der Schraubachse 5 linear von dem Gewindebolzen 2 wegbewegt werden, was also im Prinzip einer Umkehrung des vorherigen Heranführens der Schließringaufnahme 3 an den Gewindebolzen 2 entspricht. Speziell kann hier die Koppelvorrichtung 6 mit der Schließringaufnahme 3 von dem Gewindebolzen 2 wegbewegt werden, was auch in der Fig. 5b gezeigt ist.

Ferner kann ein Verfahren zum Schrauben eines Schließrings 1 mit einem Befestigungsteil 18a und einem Abrissteil 18b auf einen Gewindebolzen 2 vorgesehen sein. Hier kann vorgesehen sein, dass ein Abführgreifer 22 - welcher vorzugsweise zu dem Zuführgreifer 17 separat ist - nach dem Abreißen des Abrissteils 18b das Abrissteil 18b greift - was insbesondere kraftschlüssig erfolgen kann - und das Abrissteil 18b entfernt.

Auf diese Weise lassen sich das Zuführen des Schließrings 1, das Herstellen der Verbindung und das Abführen des Schließrings 1 automatisieren und damit die einzelnen Schritte auch höher takten.

Weiter ist es hier bevorzugt, dass dieses Greifen nach dem Wegbewegen der Schließringaufnahme 3 von dem Gewindebolzen 2 erfolgt. Bezüglich dieses Entfernens kann der Abführgreifer 22 eine Bewegung senkrecht zur Schraubachse 5 zum Entfernen des Abrissteils 18b ausführen, was in der Fig. 5c angedeutet ist. Im Anschluss kann das Abrissteil 18b in eine Abführaufnahme 23 gegeben werden, indem der Abführgreifer 22 das Abrissteil 18b fallen lässt.

Wie oben beschrieben kann es sein, dass nach dem Abreißen des Abrissteils 18b die Schließringaufnahme 3 das Abrissteil 18b weiterhin greift bzw. das Abrissteil 18b weiterhin in der Schließringaufnahme 3 liegt. Um in so einem Fall das Entfernen des Abrissteils 18b zu erleichtern ist bevorzugt vorgesehen, dass das Abrissteil 18b durch die Koppelvorrichtung 6 von der Schließringaufnahme 3 gelöst wird. Dies ist in der Fig. 5b dargestellt. Speziell kann dieses Lösen durch eine Linearbewegung der Koppelvorrichtung 6 entlang der Schraubachse 5 erfolgen. Bevorzugt ist, dass die Koppelvorrichtung 6 zum Lösen des Abrissteils 18b eine Hebefläche 6c aufweist.

Schließlich wird eine vorschlagsgemäße Schraubvorrichtung zum Schrauben eines Schließrings 1 auf einen Gewindebolzen 2, insbesondere gemäß dem vorschlagsgemäßen Verfahren, beschrieben. Bevorzugte Ausgestaltungen dieser Schraubvorrichtung ergeben sich aus den obigen bevorzugten Ausgestaltungen des vorschlagsgemäßen Verfahrens.

## Patentansprüche

1. Verfahren zum Schrauben eines Schließrings (1) auf einen Gewindebolzen (2), wobei eine Koppelvorrichtung (6) zum Einfädeln in den Gewindebolzen (2), vorzugsweise um eine Schraubachse (5), von einem Drehantrieb (4) drehend angetrieben wird und wobei anschließend der Schließring (1) durch eine von dem Drehantrieb (4) drehend angetriebene Schließringaufnahme (3) auf den von der Koppelvorrichtung (6) fixierten Gewindebolzen (2) geschraubt wird.

2. Verfahren nach Anspruch 1, **dadurch gekennzeichnet, dass** die Schließringaufnahme (3) zum Einfädeln auf den Schließring (1) von dem Drehantrieb (4), vorzugsweise um die Schraubachse (5), drehend angetrieben wird.

3. Verfahren nach Anspruch 1 oder 2, **dadurch gekennzeichnet, dass** die Schließringaufnahme (3) eine Bohrung (3a) zum Ansaugen des Schließrings (1) durch einen Unterdruck, insbesondere durch ein Vakuum, aufweist.

4. Verfahren nach einem der Ansprüche 1 bis 3, **dadurch gekennzeichnet, dass** der Drehantrieb (4) einen Motor (7) und eine Kuppelanordnung (8), insbesondere eine Freilaufanordnung (8c), zum antreibenden Kuppeln des Motors (7) mit der Schließringaufnahme (3) und der Koppelvorrichtung (6) aufweist, insbesondere, sodass bei einer Bewegung des Motors in einer ersten Richtung (9a) nur die Schließringaufnahme (3) drehend angetrieben wird und bei einer Bewegung des Motors (7) in einer der ersten Richtung (9a) entgegengesetzten Richtung (9b), vorzugsweise nur, die Koppelvorrichtung (6) drehend angetrieben wird.

5. Verfahren nach einem der Ansprüche 1 bis 4, **dadurch gekennzeichnet, dass** nach dem Einfädeln der Koppelvorrichtung (6) in den Gewindebolzen (2) die Schließringaufnahme (3) linear, vorzugsweise entlang einer Schraubachse (5), mit dem Schließring (1) bis zu einer Berührung des Schließrings (1) mit dem Gewindebolzen (2) bewegt wird.

6. Verfahren nach einem der Ansprüche 1 bis 5, **dadurch gekennzeichnet, dass** der Gewindebolzen (2) durch Verbindungsstücköffnungen (11a, b) von Verbindungsstücken (10a, b) geführt ist und dass eine Rohranordnung (12) einen aus den Verbindungsstücköffnungen herausragenden Bolzenabschnitt (2a) umläuft.

7. Verfahren nach einem der Ansprüche 1 bis 6, **dadurch gekennzeichnet, dass** die Koppelvorrichtung (6) durch einen Linearantrieb (14) linear bewegt wird, vorzugsweise, dass die Schließringaufnahme (3) durch den Linearantrieb (14) linear bewegt wird.

8. Verfahren nach einem der Ansprüche 1 bis 7, **dadurch gekennzeichnet, dass** die Schließringaufnahme (3) eine Innenkontur (15a), vorzugsweise einen Innenmehrkant, zum Fixieren des Schließrings (1) aufweist.

9. Verfahren nach einem der Ansprüche 1 bis 8, **dadurch gekennzeichnet, dass** ein Zuführgreifer (17) den Schließring (1) greift und den Schließring (1) auf der Schraubachse (5) bezogen auf die Schließringaufnahme (3) zum Einfädeln der Schließringaufnahme (3) positioniert.

10. Verfahren nach einem der Ansprüche 1 bis 9, **dadurch gekennzeichnet, dass** der Schließring (1) einen Befestigungsteil (18a) und einen Abrissteil (18b), vorzugsweise mit einer gewindefreien Innenwandung, aufweist und dass bei Erreichen eines, insbesondere vordefinierten, Abrissdrehmoments beim Aufschrauben des Schließrings (1) der Abrissteil (18b) von dem Befestigungsteil (18a) abgerissen wird, insbesondere, dass die Schließringaufnahme (3) beim Aufschrauben des Schließrings (1) diesen an dem Abrissteil (18b) angreift, weiter insbesondere, dass der Schließring (1) eine Sollbruchstelle (19), insbesondere eine Materialschwächung, zwischen dem Befestigungsteil (18a) und dem Abrissteil (18b) aufweist.

11. Verfahren nach Anspruch 10, **dadurch gekennzeichnet, dass** der Befestigungsteil (18a) einen Gewindeabschnitt (20a) mit einem Innengewinde und einen Abstandsabschnitt (20b) mit einer gewindefreien Innenwandung aufweist, insbesondere, wobei ein Abstands-Innendurchmesser (21b) des Abstandsabschnitts (20b) größer als ein Gewinde-Innendurchmesser (21a) des Gewindeabschnitts (20a) ist.

12. Verfahren nach Anspruch 11, **dadurch gekennzeichnet, dass** ein Abriss-Innendurchmesser (21c) des Abrissteils (18b) größer als der Gewinde-Innendurchmesser (21a) und/oder größer als der Abstands-Innendurchmesser (21b) ist.

13. Verfahren nach einem der Ansprüche 10 bis 12, **dadurch gekennzeichnet, dass** nach dem Abreißen des Abrissteils (18b) die Schließringaufnahme (3) das Abrissteil (18b) weiterhin greift, vorzugsweise, dass nach dem Abreißen des Abrissteils (18b) die Schließringaufnahme (3), insbesondere entlang der Schraubachse (5), linear von dem Gewindebolzen (2) wegbewegt wird, weiter insbesondere, dass die Koppelvorrichtung (6) mit der Schließringaufnahme (3) von dem Gewindebolzen (2) wegbewegt wird.

14. Verfahren zum Schrauben eines Schließrings (1) mit einem Befestigungsteil (18a) und einem Abrissteil (18b) auf einen Gewindebolzen (2) nach einem der Ansprüche 10 bis 13, **dadurch gekennzeichnet, dass** ein, vorzugsweise zu dem Zuführgreifer (17) separater, Abführgreifer (22) nach einem Abreißen des Abrissteils (18b) das Abrissteil (18b) greift und das Abrissteil (18b) entfernt.

15. Verfahren nach Anspruch 14, **dadurch gekennzeichnet, dass** das Abrissteil (18b) durch die Koppelvorrichtung (6), vorzugsweise durch eine Linearbewegung der Koppelvorrichtung (6) entlang der Schraubachse (5), von der Schließringaufnahme (3) gelöst wird, insbesondere, dass die Koppelvorrichtung (6) zum Lösen des Abrissteils (18b) eine Hebefläche (6c) aufweist.

16. Schraubvorrichtung zum Schrauben eines Schließrings (1) auf einen Gewindebolzen (2), insbesondere gemäß einem Verfahren nach einem der vorhergehenden Ansprüche,
wobei die Schraubvorrichtung einen Drehantrieb (4), eine vom Drehantrieb (4) drehend antreibbare Koppelvorrichtung (6) sowie eine von dem Drehantrieb (4) drehend antreibbare Schließringaufnahme (3) aufweist, wobei die Koppelvorrichtung (6) zum Einfädeln in den Gewindebolzen (2), vorzugsweise um eine Schraubachse (5), von dem Drehantrieb (4) drehend angetrieben wird und wobei anschließend der Schließring (1) durch die von dem Drehantrieb (4) drehend angetriebene Schließringaufnahme (3) auf den von der Koppelvorrichtung (6) fixierten Gewindebolzen (2) geschraubt wird.

## Claims

1. Method for screwing a locking ring (1) onto a threaded bolt (2), wherein a coupling device (6), for mounting in the threaded bolt (2), is driven in rotation, preferably around a screw-connection axis (5), by a rotary drive (4), and wherein, thereafter, a locking-ring holder (3), which is driven in rotation by the rotary drive (4), screws the locking ring (1) onto the threaded bolt (2), which is fixed by the coupling device (6).

2. Method according to Claim 1, **characterized in that** the locking-ring holder (3), for mounting on the locking ring (1), is driven in rotation by the rotary drive (4), preferably around the screw-connection axis (5).

3. Method according to Claim 1 or 2, **characterized in that** the locking-ring holder (3) has a bore (3a) for the suction attachment of the locking ring (1) by a negative pressure, in particular by a vacuum.

4. Method according to one of Claims 1 to 3, **characterized in that** the rotary drive (4) has a motor (7) and a clutch arrangement (8), in particular a freewheeling arrangement (8c), for driving-action coupling of the motor (7) to the locking-ring holder (3) and the coupling device (6), in particular so that, when the motor moves in the first direction (9a), only the locking-ring holder (3) is driven in rotation and, when the motor (7) moves in a direction (9b), counter to the first direction (9a), the coupling device (6), and preferably this alone, is driven in rotation.

5. Method according to one of Claims 1 to 4, **characterized in that**, once the coupling device (6) has been mounted in the threaded bolt (2), the locking-ring holder (3) is moved linearly, preferably along a screw-connection axis (5), with the locking ring (1) until the locking ring (1) comes into contact with the threaded bolt (2).

6. Method according to one of Claims 1 to 5, **characterized in that** the threaded bolt (2) is guided through connecting-piece openings (11a, b) in connecting pieces (10a, b), and **in that** a tube arrangement (12) encircles a bolt portion (2a), which projects out of the connecting-piece openings.

7. Method according to one of Claims 1 to 6, **characterized in that** the coupling device (6) is moved linearly by a linear drive (14), preferably in that the locking-ring holder (3) is moved linearly by the linear drive (14).

8. Method according to one of Claims 1 to 7, **characterized in that** the locking-ring holder (3) has an inner contour (15a), preferably a hexagonal socket, for fixing the locking ring (1).

9. Method according to one of Claims 1 to 8, **characterized in that** a supply gripper (17) grips the locking ring (1) and positions the locking ring (1) on the screw-connection axis (5) in relation to the locking-ring holder (3) in order for the locking-ring holder (3) to be mounted.

10. Method according to one of Claims 1 to 9, **characterized in that** the locking ring (1) has a fastening part (18a) and a tear-off part (18b), preferably with a thread-free inner wall, and **in that**, when an in particular predefined tear-off torque is reached when the locking ring (1) is being screwed on, the tear-off part (18b) is torn off from the fastening part (18a), in particular **in that**, when the locking ring (1) is being screwed on, the locking-ring holder (3) acts on the tear-off part (18b) of the locking ring, and also in particular in that the locking ring (1) has a predetermined breaking point (19), in particular a material weakening, between the fastening part (18a) and the tear-off part (18b).

11. Method according to Claim 10, **characterized in that** the fastening part (18a) has a threaded portion (20a) with an internal thread and a spacer portion (20b) with a thread-free inner wall, in particular wherein an internal diameter (21b) of the spacer portion (20b) is greater than an internal diameter (21a) of the threaded portion (20a).

12. Method according to Claim 11, **characterized in that** an internal diameter (21c) of the tear-off part (18b) is greater than the internal diameter (21a) and/or greater than the internal diameter (21b).

13. Method according to one of Claims 10 to 12, **characterized in that**, once the tear-off part (18b) has been torn off, the locking-ring holder (3) continues to grip the tear-off part (18b), preferably **in that**, once the tear-off part (18b) has been torn off, the locking-ring holder (3) is moved away linearly from the threaded bolt (2), in particular along the screw-connection axis (5), also in particular **in that** the coupling device (6) along with the locking-ring holder (3) is moved away from the threaded bolt (2) .

14. Method by means of which a locking ring (1) having a fastening part (18a) and a tear-off part (18b) is screwed onto a threaded bolt (2) according to one of Claims 10 to 13, **characterized in that**, once the tear-off part (18b) has been torn off, a removal gripper (22), preferably one which is separate from the supply gripper (17), grips the tear-off part (18b) and removes the tear-off part (18b).

15. Method according to Claim 14, **characterized in that** the tear-off part (18b) is detached from the locking-ring holder (3) by the coupling device (6), preferably by a linear movement of the coupling device (6) along the screw-connection axis (5), in particular **in that** the coupling device (6) has a lifting surface (6c) for detaching the tear-off part (18b) .

16. Screw-connection apparatus for screwing a locking ring (1) onto a threaded bolt (2), in particular by a method according to one of the preceding claims, wherein the screw-connection apparatus has a rotary drive (4), a coupling device (6), which can be driven in rotation by the rotary drive (4), and also a locking-ring holder (3), which can be driven in rotation by the rotary drive (4), wherein the coupling device (6), for mounting in the threaded bolt (2), is driven in rotation, preferably around a screw-connection axis (5), by the rotary drive (4), and wherein, thereafter, the locking-ring holder (3), which is driven in rotation by the rotary drive (4), screws the locking ring (1) onto the threaded bolt (2), which is fixed by the coupling device (6).

## Revendications

1. Procédé de vissage d'une bague de fermeture (1) sur un boulon fileté (2), un dispositif d'accouplement (6) étant entraîné en rotation par un entraînement en rotation (4), de préférence sur un axe de vis (5), afin d'être vissé dans le boulon fileté (2) et la bague de fermeture (1) étant alors vissée sur le boulon fileté (2), fixé par le dispositif d'accouplement (6), par le biais d'un logement de bague de fermeture (3) entraîné en rotation par l'entraînement en rotation (4).

2. Procédé selon la revendication 1, **caractérisé en ce que** le logement de bague de fermeture (3) est entraîné en rotation par l'entraînement en rotation (4), de préférence sur l'axe de vis (5) afin de d'être vissé sur la bague de fermeture (1).

3. Procédé selon la revendication 1 ou 2, **caractérisé en ce que** le logement de bague de fermeture (3) comporte un alésage (3a) destiné à aspirer la bague de fermeture (1) par le biais d'une dépression, notamment par le biais d'un vide.

4. Procédé selon l'une des revendications 1 à 3, **caractérisé en ce que** l'entraînement en rotation (4) comporte un moteur (7) et un ensemble d'accouplement (8), notamment un ensemble à roue libre (8c), destiné à l'accouplement en entraînement du moteur (7) avec le logement de bague de fermeture (3) et le dispositif d'accouplement (6), notamment de sorte que, lorsque le moteur se déplace dans un premier sens (9a), seul le logement de bague de fermeture (3) soit entraîné en rotation et, lorsque le moteur (7) se déplace dans un sens (9b) opposé au premier sens (9a), de préférence seul, le dispositif d'accouplement (6) est entraîné en rotation.

5. Procédé selon l'une des revendications 1 à 4, **caractérisé en ce qu'**après vissage du dispositif d'accouplement (6) dans le boulon fileté (2), le logement de la bague de fermeture (3) est déplacé linéairement, de préférence le long d'un axe de vis (5), avec la bague de fermeture (1) jusqu'à ce que la bague de fermeture (1) touche le boulon fileté (2).

6. Procédé selon l'une des revendications 1 à 5, **caractérisé en ce que** le boulon fileté (2) est guidé à travers des ouvertures (11a, b) de pièces de liaison (10a, b) et **en ce qu'**un ensemble de tubes (12) s'étend autour d'une portion de boulon (2a) qui fait saillie des ouvertures de pièce de liaison.

7. Procédé selon l'une des revendications 1 à 6, **caractérisé en ce que** le dispositif d'accouplement (6) est déplacé linéairement par un entraînement linéaire (14), de préférence **en ce que** le logement de bague de fermeture (3) est déplacé linéairement par l'entraînement linéaire (14).

8. Procédé selon l'une des revendications 1 à 7, **caractérisé en ce que** le logement de bague de fermeture (3) présente un contour intérieur (15a), de préférence un contour polygonal intérieur, destiné à la fixation de la bague de fermeture (1).

9. Procédé selon l'une des revendications 1 à 8, **caractérisé en ce qu'**une pince d'amenée (17) saisit la bague de fermeture (1) et positionne la bague de fermeture (1) sur l'axe de vis (5) par rapport au logement de bague de fermeture (3) afin de visser le logement de bague de fermeture (3).

10. Procédé selon l'une des revendications 1 à 9, **caractérisé en ce que** la bague de fermeture (1) comporte une partie de fixation (18a) et une partie d'arrachement (18b), de préférence à paroi intérieure non filetée, et **en ce que**, lorsqu'un couple d'arrachement, en particulier prédéfini, est atteint lors du vissage de la bague de fermeture (1), la partie d'arrachement (18b) est arrachée de la partie de fixation (18a), en particulier **en ce que** le logement de bague de fermeture (3) saisit la bague de fermeture (1) sur la partie d'arrachement (18b) lorsque ladite bague de fermeture est vissée, plus particulièrement **en ce que** la bague de fermeture (1) comporte un point de rupture (19), en particulier un affaiblissement de matériau entre la partie de fixation (18a) et la partie d'arrachement (18b).

11. Procédé selon la revendication 10, **caractérisé en ce que** la pièce de fixation (18a) comporte une portion filetée (20a) pourvue d'un filetage intérieur et une portion d'espacement (20b) pourvue d'une paroi intérieure non filetée, notamment un diamètre intérieur d'espacement (21b) de la portion d'espacement (20b) étant supérieur à un diamètre intérieur de filetage (21a) de la portion de filetage (20a).

12. Procédé selon la revendication 11, **caractérisé en ce qu'**un diamètre intérieur d'arrachement (21c) de la partie d'arrachement (18b) est supérieur au diamètre intérieur de filetage (21a) et/ou supérieur au diamètre intérieur d'espacement (21b).

13. Procédé selon l'une des revendications 10 à 12, **caractérisé en ce que**, après arrachement de la partie d'arrachement (18b), le logement de bague de fermeture (3) s'engage en outre avec la partie d'arrachement (18b), de préférence **en ce que**, après arrachement de la partie d'arrachement (18b), le logement de bague de fermeture (3) est éloigné linéairement du boulon fileté (2), en particulier le long de l'axe de vis (5), plus particulièrement **en ce que** le dispositif d'accouplement (6) est éloigné du boulon fileté (2) avec le logement de bague de fermeture (3).

14. Procédé de vissage d'une bague de fermeture (1) pourvue d'une partie de fixation (18a) et d'une partie d'arrachement (18b) sur un boulon fileté (2) selon l'une des revendications 10 à 13, **caractérisé en ce que**, après arrachement de la partie d'arrachement (18b), une pince d'enlèvement (22), de préférence séparée de la pince d'amenée (17), saisit la partie d'arrachement (18b) et éloigne la partie d'arrachement (18b) .

15. Procédé selon la revendication 14, **caractérisé en ce que** la partie d'arrachement (18b) est libérée du logement de bague de fermeture (3) par le dispositif d'accouplement (6), de préférence par un mouvement linéaire du dispositif d'accouplement (6) le long de l'axe de vis (5), en particulier **en ce que**, pour libérer la partie d'arrachement (18b), le dispositif d'accouplement (6) comporte une surface de levage (6c).

16. Dispositif de vissage destiné à visser une bague de fermeture (1) sur un boulon fileté (2), notamment conformément à un procédé selon l'une des revendications précédentes,
le dispositif de vissage comportant un entraînement en rotation (4), un dispositif d'accouplement (6) qui peut être entraîné en rotation par l'entraînement en rotation (4) et un logement de bague de fermeture (3) qui peut être entraîné en rotation par l'entraînement en rotation (4), le dispositif d'accouplement (6) est entraîné en rotation, de préférence sur un axe de vis (5), par l'entraînement rotatif (4) afin d'être vissé dans le boulon fileté (2) et la bague de fermeture (1) étant ensuite vissée sur le boulon fileté (2), fixé par le dispositif d'accouplement (6), par le logement de bague de fermeture (3) entraîné en rotation par l'entraînement en rotation (4).
